# EUROPÄISCHE PATENTANMELDUNG

(11) **EP 3 623 955 A1**
(43) Veröffentlichungstag der Anmeldung: **18.03.2020**
(21) Anmeldenummer: 18194166.7
(22) Anmeldetag: 13.09.2018
(51) Int. Cl.: G06F 15/177

(54) **VERFAHREN ZUM ERZEUGEN VON IDENTIFIKATOREN FÜR INFORMATIONSEINHEITEN IN EINEM VERTEILTEN SYSTEM**

(71) Anmelder: Siemens Aktiengesellschaft, 80333 München (DE)
(72) Erfinder: Kussyk, Jaroslaw, 1170 Wien (AT); Kapoun, Helmut, 1120 Wien (AT)
(74) Vertreter: Maier, Daniel Oliver

(57) **Zusammenfassung**

Die Erfindung betrifft ein Verfahren zum Erzeugen von Identifikatoren (EID11, ..., EID41) für Informationseinheiten (E11, ..., E41) in einem verteilten System. Dabei werden durch Zuordnung von Informationseinheiten (E11, ..., E41) jeweilige Funktionsweisen (F11, ..., F41) von Funktionseinheiten (S11, ..., S41), insbesondere Softwaremodulen und/oder Hardwareeinheiten, im verteilten System festgelegt. Weiterhin werden für die jeweiligen Informationseinheiten (E11, ..., E41) jeweils zugehörige Identifikatoren (EID11, ..., EID41) erzeugt (101) und diesen zur Identifikation und gegebenenfalls zur Adressierung zugeordnet. Für die Erstellung eines Identifikators (EID11, ..., EID41) wird eine eindeutige Komponentenidentifikation (ID11, ..., ID41) einer Komponente (HW11, ..., HW41) des verteilten Systems herangezogen (102). Die eindeutige Komponentenidentifikation (ID11, ..., ID41) wird durch einem jeweils aktuellen Zählerwert (n, m1, m2, ..., 1) einer Zählereinheit (ECC11, ... ECC41) kombiniert (103), wobei die Zählereinheit (ECC11, ... ECC41) von jener Komponente (HW11, ..., HW41) des verteilten Systems umfasst wird, welche die verwendete, eindeutige Komponentenidentifikation (ID11, ..., ID41) aufweist. Nach Erstellen des jeweiligen Identifikators (EID11, ..., EID41) wird der Zählerwert (n, m1, m2, ..., 1) inkrementiert (104) und der inkrementierte Zählerwert (n+1, m1+1, m2+1, ..., 1+1) als jeweils aktueller Zählerwert in der Zählereinheit abgespeichert (105).

## Beschreibung

### Technisches Gebiet

Die vorliegende Erfindung betrifft ein Verfahren zum Erzeugen von Identifikatoren für Informationseinheiten in einem verteilten System. Dabei werden durch Zuordnung von Informationseinheiten jeweilige Funktionsweisen von Funktionseinheiten, insbesondere Softwaremodulen und/oder Hardwareeinheiten, im verteilten System festgelegt. Weiterhin werden für die jeweiligen Informationseinheiten jeweils zugehörige Identifikatoren erzeugt und diesen zur Identifikation und gegebenenfalls zur Adressierung der jeweiligen Informationseinheiten zugeordnet.

### Stand der Technik

Heutzutage werden in vielen Bereichen wie z.B. im Energiebereich als Systeme zur Energieerzeugung, Energieverteilung und Energieübertragung oder in verschiedenen Industriebereichen z.B. als Fertigungsanlagen, in der Prozesstechnik verteilte Systeme eingesetzt, welche auch einer Vielzahl an verschiedenen Einheiten wie z.B. Hardwarekomponenten und Softwaremodulen aufgebaut sind.

Dabei sind die Einheiten eines verteilten Systems im Rahmen einer bestimmten Architektur miteinander gekoppelt und wickeln Aufgaben kooperativ gemeinsam ab. Eine logische Verteilung von Funktionen bzw. Funktionseinheiten, insbesondere Softwaremodule oder -instanzen, auf die Komponenten des verteilten Systems, insbesondere die Hardwareeinheiten, kann mit einer darauf abgestimmten physischen Dezentralisierung in einem Netzwerk einhergehen. Eine Funktionseinheit weist dabei eine bestimmte Funktionalität bzw. Funktionsweise auf, welche dann von der jeweiligen Komponente bzw. auf der jeweiligen Hardwareeinheit ausgeführt wird.

Um eine bestimmte Funktionalität bzw. Funktionsweise zu erhalten, werden für die Funktionseinheiten beispielsweise bei einer Konfiguration und/oder Parametrierung so genannte Entitäten erstellt und diesen dann zugeordnet. Als Entität, welche auch als Informationseinheit oder Informationsobjekt bezeichnet werden kann, wird in der Informatik, insbesondere in der Datenmodellierung, ein eindeutig zu bestimmendes Objekt bezeichnet, über welches Informationen gespeichert oder verarbeitet werden sollen. Eine Entität kann beispielsweise als Informationseinheit mit definierten Attributen modelliert bzw. erstellt werden, wobei die jeweiligen Attribute und/oder Parameter einen Identifikator für die jeweilige Entität bzw. Informationseinheit umfassen. Mit Hilfe dieses Identifikators kann die Funktionalität, welche von der Entität bzw. Informationseinheit definiert wird, eindeutig identifiziert und gegebenenfalls adressiert werden.

Als Entität wird z.B. eine Dateneinheit mit Konfigurationsdaten, Parametern, Identifikator und/oder weiteren Attributen bezeichnet werden. Weiterhin kann beispielsweise aber auch eine so genannte Gerätefirmware oder -software, eine ladbare Applikation, ein ausführbarer Programmkode und/oder aufführbare Konfiguration für einen integrierten, elektronischen Bauteil (z.B. FPGA), etc. als Entität bzw. Informationseinheit gesehen werden, durch welche jeweils in Verbindung mit entsprechenden Konfigurationsdaten und Parametern eine grundsätzliche Funktionsweise einer Hardwareeinheit oder Komponente definiert wird. Derartige Komponenten sind z.B. Automatisierungsgeräte, elektronische Bauteile, logische Knoten oder Geräte, so genannten Intelligent Electronic Devices (IEDs) oder so genannten Remote Terminal Units (RTUs).

IEDs sind dabei üblicherweise prozessorbasierte Steuerkomponenten, welche bei verschiedensten Einheiten in Energiesystemen (z.B. Transformatoren, Kondensatoren, Schützen, Leistungs- oder Trennschaltern, etc.) eingesetzt werden und z.B. der Messung, Steuerung und Kommunikation dienen. Die jeweilige Funktionalität bzw. Funktionsweise der IED kann dann mittels Konfiguration bzw. über die Zuordnung der entsprechenden Entität bzw. Informationseinheit definiert werden. RTUs bzw. Fernbedienungsterminals sind üblicherweise regelungs- oder steuerungstechnische Einheiten zur Fernsteuerung, welche z.B. in der Prozesstechnik, bei der Energieübertragung, der Energieverteilung und der Energieerzeugung verwendet werden, um von einer zentralen Stelle (z.B. Warte oder örtlich entfernten Zentrale) aus bestimmte Prozesse zu überwachen und/oder fernzusteuern.

Vor allem bei komplexen, verteilten Systemen wie z.B. Anlagen im Energiebereich oder in der Prozesstechnik ist es häufig notwendig, dass die jeweiligen Entitäten bzw. Informationseinheiten sowie die jeweils definierte Funktionalität einer Komponente mittels der jeweils zugehörigen Identifikatoren eindeutig und nachhaltig identifizierbar sind - z.B. für Engineering- und/oder Wartungszweck. Nachhaltig bedeutet dabei, dass eine eindeutige Erzeugung von zukünftigen Identifikatoren und ein Beibehalten von bereits erzeugten und Informationseinheiten zugeordneten Identifikatoren auch dann ermöglicht wird, wenn eine mit der Entität bzw. Informationseinheit verbundene Funktionseinheit - vor allem Hardwarekomponente - erweitert, ausgetauscht und/oder (gegebenfalls nach einer Reparatur) wiederverwendet wird. Weiterhin kann es bei dezentral verteilten Systemen wie z.B. Anlagen im Energiebereich beispielsweise in der Praxis vorkommen, dass bei Erstellung, Konfiguration und/oder Parametrierung von Entitäten bzw. Informationseinheiten und den zugehörigen Identifikatoren vor Ort keine Kommunikationsverbindung zu einer zentralen oder übergeordneten Kontrollinstanz besteht. D.h. es ist nicht oder nur mit großem Aufwand möglich zu prüfen, ob der jeweils für eine Informationseinheit erzeugte Identifikator im jeweiligen System eindeutig und nachhaltig ist.

Heutzutage wird beispielsweise häufig eine eindeutige Identifikation der Hardwarekomponente verwendet, auf welcher die Informationseinheit abgespeichert wird bzw. die zugeordnete Funktionseinheit abläuft, um für die Informationseinheit einen eindeutigen Identifikator zu erstellen. Eine derartige eindeutige Identifikation einer Hardwareeinheit ist z.B. eine Seriennummer der Hardwareeinheit. Diese Identifikation kann beispielsweise als Zahl oder Zeichenfolge ausgeführt, werkseitig erzeugt und in die jeweilige Hardwarekomponente eingebracht (z.B. gespeichert) oder an der jeweiligen Hardwarekomponente aufgebracht (z.B. in Form eines Barcodes, QR-Codes, etc.) werden. Dabei besteht allerdings der Nachteil, dass der Identifikator einer Informationseinheit nicht von jener Hardwarekomponente unabhängig ist, auf welchem die der Informationseinheit zugeordnete Funktionseinheit ausgeführt wird. Insbesondere im Fall einer Wiederverwendung einer Hardwarekomponente mit derselben Hardwareidentifikation (z.B. nach einem Hardwaretausch, nach einer Reparatur) wäre eine wiederholte Erzeugung von Identifikatoren für weitere Informationseinheiten möglich. D.h. es würde z.B. bei Wiedereinsatz der Hardwarekomponente für eine neue Informationseinheit ein bereits erzeugter und von einer anderen Informationseinheit genutzter Identifikator generiert werden. Die Identifikatoren wären damit - insbesondere ohne Einsatz einer zentralen Kontrollinstanz - im verteilten System nicht mehr eindeutig.

Um eine gemeinsame Nutzung einer Hardwareidentifikation als Identifikator für zumindest zwei Informationseinheiten zu vermeiden, kann beispielsweise die Hardwareidentifikation gemeinsam mit einer aktuellen Zeit zur Erzeugung des Identifikators genutzt werden, wobei die aktuelle Zeit z.B. durch die jeweilige Hardwarekomponente verlässlich bereit gestellt werden muss. Allerdings steht beispielsweise in der Praxis häufig die aktuelle Zeit nicht zur Verfügung, da sie z.B. in der jeweiligen Hardwarekomponente nicht gesetzt ist oder erst von einem übergeordneten System (z.B. einer zentralen Kontrollinstanz, etc.) übergeben wird oder aus einer unzuverlässigen Quelle stammt, welcher z.B. erst nach Erstellung der Entität bzw. Informationseinheit und dem zugehörigen Identifikator verifiziert und genutzt werden kann.

Aus der Schrift "Leach, P.; Mealling, M.; Salz, R.; "A Universally Unique Identifier (UUID) URN Namespace", Network Working Group; Request for Comments 4122, The Internet Society; July 2005." ist eine Methode bekannt, bei welcher ein Identifikator auf Basis einer Zufallszahl gebildet werden. Die Zufallszahl wird z.B. durch einen Zufallsgenerator oder einen Pseudozufallsgenerator aus einer ausreichend großen Zahlenmenge erzeugt. Auf diese Weise kann zwar eine Wahrscheinlichkeit einer Erzeugung von zumindest zwei gleichen Identifikatoren für verschiedene Informationseinheiten erheblich reduziert werden. Diese Wahrscheinlichkeit ist allerdings nicht null. Weiterhin steht ein Zufallsgenerator oder ein hochqualitativer, unabhängiger Pseudozufallsgenerator nicht immer zur Verfügung - insbesondere bei dezentral zu konfigurierenden und wartenden, verteilten Systemen.

### Darstellung der Erfindung

Der Erfindung liegt daher die Aufgabe zugrunde, ein Verfahren zum Erzeugen von Identifikatoren, welche Informationseinheiten zur Identifikation in einem verteilten System zugeordnet sind, anzugeben, bei welchen auf einfache und sichere Weise eine Eindeutigkeit und Nachhaltigkeit der Identifikatoren - insbesondere bei Erweiterung, Austausch und Wiederverwendung einzelner Hardwarekomponenten - sichergestellt wird.

Diese Aufgabe wird durch ein Verfahren der eingangs genannten Art mit den Merkmalen gemäß dem unabhängigen Patentanspruch gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren der eingangs angeführten Art zum Erzeugen von Identifikatoren für Informationseinheiten in einem verteilten System. Dabei wird mittels Zuordnung einer Informationseinheit zu einer Funktionseinheit eine jeweilige Funktionsweise bzw. Funktionalität dieser Funktionseinheit im verteilten System festgelegt. Weiterhin wird beim Erstellen der jeweiligen Informationseinheit ein jeweils zugehöriger Identifikator erzeugt, welcher für eine Identifikation und gegebenenfalls eine Adressierung der jeweiligen Informationseinheit zugeordnet wird. Dabei wird für ein Erstellen des Identifikators eine eindeutige Komponentenidentifikation einer Komponente, insbesondere einer Hardwareeinheit, des verteilten Systems herangezogen. Diese eindeutige Komponentenidentifikation wird mit einem jeweils aktuellen Zählerwert einer Zählereinheit kombiniert, wobei die Zählereinheit von jener Komponente umfasst wird, welcher die verwendete, eindeutige Komponentenidentifikation zugeordnet ist. Nach Erstellen des jeweiligen Identifikators wird der Zählerwert inkrementiert und der inkrementierte Zählerwert als jeweils aktueller Zählerwert in der Zählereinheit abgespeichert.

Der Hauptaspekt des erfindungsgemäßen Verfahrens besteht hauptsächlich darin, dass durch das Erzeugen des jeweiligen Identifikators auf Basis einer eindeutigen, in einer Komponente gespeicherten Komponentenidentifikation - idealerweise einer Hardware-ID - und eines in der Zählereinheit derselben Komponente abgespeicherten aktuellen Zählerwerts gewährleistet ist, dass auch künftig erzeugte Identifikatoren eindeutig bleiben - auch ohne Einsatz oder Verbindung zu einer zentralen Kontrollinstanz. Diese Eindeutigkeit bleibt selbst dann erhalten, wenn eine Hardwarekomponente getauscht und in einer anderen Systemeinheit des verteilten Systems (wieder)-verwendet wird.

Das bedeutet durch das erfindungsgemäße Verfahren wird der erzeugte Identifikator - trotz Verwendung der Komponentenidentifikation - von der Komponente bzw. Hardwareeinheit, von welcher die Komponentenidentifikation stammt, unabhängig. Dies ist insbesondere vorteilhaft, wenn als Hardware bzw. System z.B. eine so genannte Computer-Cloud oder ein Multiprozessor-System zum Einsatz kommt, bei dem mehrere Komponentenidentifikationen bzw. Hardware-IDs verfügbar sind und den jeweiligen Informationseinheiten für die jeweiligen Identifikatoren nicht mehr eindeutig zuordenbar sind, oder bei dem nicht alle Komponenten Komponentenidentifikationen bzw. Hardware-IDs haben.

Weiterhin kann eine Informationseinheit idealerweise ohne großen Aufwand auf eine neue Komponente (z.B. bei Austausch der Hardwarekomponente) übertragen werden. Durch die Hardwareunabhängigkeit des mit dem erfindungsgemäßen Verfahren erzeugten Identifikators muss dieser nicht an die neue Komponente angepasst werden. Der Anpassungs- und Konfigurationsaufwand bei einem Hardwaretausch bleibt daher relativ gering.

Weiterhin bietet das erfindungsgemäße Verfahren vor allem durch die Hardwareunabhängigkeit der Identifikatoren die Möglichkeit, dass Informationseinheiten bzw. Entitäten durch den jeweils zugeordneten Identifikator beispielsweise direkt prozesstechnischen Adressen und/oder Schnittstellen zugeordnet werden. Dies ist insbesondere von Vorteil, wenn mehrere Informationseinheiten, von welchen z.B. ihnen fix zugeordnete Prozessschnittstellen bedient werden, beispielsweise von mehreren Hardwarekomponenten mit jeweils eigenen Hardware-IDs auf eine gemeinsame Hardwarekomponente mit einer einzigen Hardware-ID transferiert werden sollen oder umgekehrt von einer gemeinsamen Hardwarekomponente auf mehrere Komponenten oder Module (gegebenenfalls ohne eigene Hardware-ID) verteilt werden sollen.

Es ist vorteilhaft, wenn während der Erstellung der Informationseinheit und des jeweils zugehörigen Identifikators ein Zugriff auf die Zählereinheit zumindest eingeschränkt wird. Idealerweise wird dabei vor allem ein Speicherzugriff auf die Zählereinheit und eventuell ein Lesezugriff auf die Zählereinheit eingeschränkt oder gesperrt, damit die für die Erzeugung der Identifikatoren verwendeten Zählerwerte der jeweiligen Zählereinheit konsistent gehalten werden. Nach Erstellung der Informationseinheit und des jeweils zugehörigen Identifikators kann der Zugriff auf die Zählereinheit wieder freigegeben werden, um z.B. den inkrementierten Zählerwert als aktuellen Zählerwert zu speichern.

Idealerweise wird die Zählereinheit der jeweiligen Komponente mit einem definierten Startwert initialisiert. Eine Initialisierung der Zählereinheit der jeweiligen Komponenten kann beispielsweise durch einen Hersteller der Komponente (z.B. werkseitig) erfolgen oder bei einer Erstinitialisierung der Komponente durchgeführt werden. Als definierter Startwert kann beispielsweise ein beliebiger ganzzahliger Wert oder Null verwendet werden.

Eine bevorzugte Ausführungsform der Erfindung sieht vor, dass für die Erstellung der Informationseinheit und des jeweils zugehörigen Identifikators eine Generierungseinheit vorgesehen wird. Die Erstellung einer neuen Informationseinheit und des zugehörigen Identifikators mittels der Generierungseinheit kann beispielsweise automatisch, automatisiert oder manuell erfolgen. Mit Hilfe der Generierungseinheit können in vorteilhafter Weise auch mehrere Informationseinheiten mit zugehörigen Identifikatoren erstellt werden, wobei z.B. dieselbe Komponentenidentifikation ergänzt um unterschiedliche aktuelle Zählerwerte verwendet wird. Die Generierungseinheit kann idealerweise als Funktionseinheit ausgeführt sein, welche auf derselben Komponente bzw. Hardwareeinheit ausgeführt wird, für welche die jeweilige Informationseinheit und der jeweils zugehörige Identifikator erstellt wird. D.h. die Funktionseinheit, welcher die Informationseinheit zugeordnet wird, wird von der Komponente ausgeführt, auf welcher auch die Generierungseinheit abläuft.

Alternativ kann die Generierungseinheit auch auf einer separaten bzw. eigenen Komponente ausgeführt werden. Diese Komponente kann dann beispielsweise über eine Kommunikationsvermittungseinheit (z.B. ein Gateway, einen Proxyserver, einen Router, eine Bridge, etc.) mit jener Komponente verbunden werden, für welche die jeweilige Informationseinheit und der jeweils zugehörige Identifikator erstellt werden. Die separate Komponente, auf welcher die Generierungseinheit abläuft, kann auch über eine direkte Kommunikationsverbindung wie z.B. eine Busverbindung, eine LAN-Verbindung oder das Internet mit jener Komponente verbunden sein, für welche die jeweilige Informationseinheit und der jeweils zugehörige Identifikator erstellt werden. Die Generierungseinheit kann dann direkt mit dieser Komponente kommunizieren. Je nach Verfügbarkeit können für das Erstellen der jeweiligen Identifikatoren für der jeweiligen Informationseinheiten die Komponentenidentifikation und der jeweils aktuelle Zählerwert der Komponente, auf welcher der Generierungseinheit ausgeführt wird, oder die Komponentenidentifikation und der jeweils aktuelle Zählerwert der Komponente der Kommunikationsvermittlungseinheit oder die Komponentenidentifikation und der jeweils aktuelle Zählerwert jener Komponente verwendet werden, für die jeweilige Informationseinheit erstellt wird.

Bei eine zweckmäßigen Weiterbildung des erfindungsgemäßen Verfahrens ist vorgesehen, dass die jeweilige Informationseinheit und der jeweils zugehörige, erzeugte Identifikator in einer Speichereinheit mit einer zusätzlichen Status- und/oder Erstellungsinformation abgespeichert werden. Dabei kann beispielsweise zusätzlich der jeweils für den erzeugten Identifikator genutzte Zählerwert als Nummer gespeichert werden und auf diese einfache Weise alle mit derselben eindeutigen Komponentenidentifikation erzeugten Identifikatoren bzw. zugehörigen Informationseinheiten in der Speichereinheit konsistent erfasst werden. Dieser Nummer bzw. dem entsprechenden Identifikator bzw. der entsprechenden Informationseinheit können dann Status- und/oder Erstellungsinformationen wie z.B. Erstellungszeit, Zeit der letzten Statusänderung, Status der zugehörigen Informationseinheit (z.B. aktiv, ungültig, für Verwendung freigegeben, inaktiv, gesperrt, gelöscht, etc.) zugeordnet werden.

Weiterhin kann in vorteilhafter Weise vorgesehen sein, dass in der Speichereinheit zu den jeweils erzeugten Identifikatoren abgelegte Informationen mit Hilfe der Generierungseinheit bearbeitet werden. Insbesondere die Statusinformation zu den jeweiligen Identifikatoren kann auf einfache Weise durch die Generierungseinheit ergänzt oder aktualisiert werden, wenn beispielsweise eine Informationseinheit bzw. der zugehörige Identifikator für ungültig erklärt, für die Verwendung freigegeben, (vorübergehend) gesperrt oder gelöscht wurde oder werden soll. Wurden z.B. eine in der Speichereinheit erfasste Informationseinheit und damit der zugehörige Identifikator gelöscht, so kann z.B. dieser Identifikator für eine andere Informationseinheit verwendet werden. In der Speichereinheit kann dies z.B. durch eine entsprechende Änderung der Statusinformation der jeweiligen Informationseinheit bzw. des jeweiligen Identifikators angezeigt werden. Es kann aber auch der entsprechende Eintrag in der Speichereinheit gelöscht werden. Die Speichereinheit kann z.B. in der Komponente, für welche die jeweilige Informationseinheit erzeugt wurde, oder in der Komponente, auf welcher die Generierungseinheit abläuft, angeordnet sein.

Es ist weiterhin günstig, wenn für die Erstellung des Identifikators für die jeweilige Informationseinheit zusätzliche Identifikationsinformation verwendet wird. Dadurch wird zusätzlich sichergestellt, dass die jeweiligen Identifikatoren der jeweiligen Informationseinheiten eindeutig und nachhaltig sind. Als zusätzliche Identifikationsinformation können beispielsweise eine aktuelle Zeit bzw. Zeitpunkt der Erstellung, ein Zeitstempel, eine so genannte MAC-Adresse der jeweiligen Komponente, eine Knoten-Identifikation, ein Versionsinformation (z.B. eines Softwaremoduls, einer Firmware, etc.), eine Typenkennung, Namen, Namensbereich, etc. verwendet werden.

Die jeweilige Informationseinheit und der zugehörige Identifikator können vorzugsweise nach einer Zuordnung zur jeweiligen Funktionseinheit bzw. Übertragung auf die jeweilige Komponente in einem nicht flüchtigen bzw. spannungsausfallsicheren Speicherelement abgespeichert werden. Als Speicherelemente können dazu beispielsweise nichtflüchtige, elektronische Speicherbausteine wie z.B. so genannte Read-Only-Memories (ROMs) oder so genannte Electrically Erasable Programmable Read-Only-Memories (EEPROMs) bzw. Festwertspeicher eingesetzt werden. Alternativ können für die Speicherelemente auch spannungsausfallsichere Speicher eines so genannten Crypto-Chips oder andere sichere Datenträger genutzt werden.

Es ist ebenfalls vorteilhaft, wenn auch die Komponentenidentifikation, welche für die Erstellung des jeweiligen Identifikators herangezogen wird, und der jeweilige aktuelle Zählerwert der Zählereinheit in einem nicht flüchtigen bzw. spannungsausfallssicheren Speicherelement auf der jeweiligen Komponente abgespeichert werden. Die Komponentenidentifikation kann beispielsweise durch einen Hersteller der Komponente (z.B. werkseitig) in die Komponente oder während einer Erstinitialisierung der Komponente in die Komponente eingebracht werden. Bei einer Einbringung während der Erstinitialisierung kann die Komponentenidentifikation z.B. mittels manueller Eingabe oder durch Scannen eines Barcodes oder QR-Codes, welcher die Komponentenidentifikation enthält, in das nicht flüchtige Speicherelement übertragen werden. Als nicht flüchtiges Speicherelement können ebenfalls nichtflüchtige, elektronische Speicherbausteine wie z.B. so genannte Read-Only-Memories (ROMs) oder so genannte Electrically Erasable Programmable Read-Only-Memories (EEPROMs) bzw. Festwertspeicher eingesetzt werden.

Idealerweise werden die Komponentenidentifikation, der jeweils aktuelle Zählerwert der Zählereinheit sowie die jeweiligen Identifikatoren der jeweiligen Informationseinheiten kodiert gespeichert. Dies kann z.B. als Hash-Wert oder ergänzt um eine Prüfsumme bzw. Prüfsequenz oder als digitale Signatur oder als Ergebnis von entsprechenden Transformationen, um eine Verschlüsselung bzw. Authentifizierung des jeweiligen Identifikators und/oder eine Erkennung von eventuell auftretenden Bitfehlern und eventuell deren Korrektur zu ermöglichen.

Sollte bei einer Komponente bzw. Hardwareeinheit des verteilten Systems ein Auslesen des jeweils aktuellen Zählerwerts aus der Zählereinheit oder der jeweiligen Komponentenidentifikation nicht mehr möglich bzw. der jeweils aktuelle Zählerwert oder die jeweiligen Komponentenidentifikation nicht mehr konsistent und/oder vertrauenswürdig sein (z.B. nach einer Konsistenz-, Prüfsummen-/Prüfsequenz-, Hash-, Signaturprüfung, etc.), so ist die jeweilige Komponente bzw. Hardwareeinheit mit der zugehörigen Komponentenidentifikation nicht mehr für die Erzeugung von Identifikatoren für Informationseinheiten einsetzbar. Die entsprechende Komponente soll z.B. ersetzt und/oder repariert werden und darf z.B. nach einer Reparatur bzw. einen Ersatz nur dann wieder verwendet werden, wenn ein letztgültiger konsistenter und vertrauenswürdiger Zählerwert der von der Komponente umfassten Zählereinheit und/oder eine konsistente und vertrauenswürdige Komponentenidentifikation verfügbar bzw. wiederherstellbar ist. Als Reparatur der Komponente ist dabei beispielsweise auch ein vollständiger oder teilweiser Ersatz dieser Komponente durch eine funktional gleichwertige Komponente bzw. Hardwareeinheit zu sehen.

Sind ein letztgültiger konsistenter und vertrauenswürdiger Zählerwert der von der reparierten bzw. ersetzten Komponente umfassten Zählereinheit und/oder eine konsistente und vertrauenswürdige Komponentenidentifikation nicht mehr verfügbar bzw. verloren gegangen, so darf die reparierte Komponente bzw. die Ersatzkomponente nur mit einer neuen, eindeutigen Komponentenidentifikation für die Erzeugung von Identifikatoren eingesetzt werden.

### Kurzbeschreibung der Zeichnung

Die Erfindung wird nachfolgend in beispielhafter Weise anhand der beigefügten Figuren erläutert. Es zeigen dabei:
- Figur 1: einen schematischen und beispielhaften Auflauf des erfindungsgemäßen Verfahrens zum Erzeugen von Identifikatoren für Informationseinheiten in einem verteilten System
- Figur 2: beispielhaft eine erste Ausführungsvariante des erfindungsgemäßen Verfahrens mit separaten Komponenten für Erstellen und Ablauf der Informationseinheiten
- Figur 3: beispielhaft eine zweite Ausführungsvariante des erfindungsgemäßen Verfahrens mit separaten Komponenten für Erstellen und Ablauf der Informationseinheiten
- Figur 4: beispielhaft eine dritte Ausführungsvariante des erfindungsgemäßen Verfahrens mit separaten Komponenten für Erstellen und Ablauf der Informationseinheiten
- Figur 5: beispielhaft eine Ausführungsvariante des erfindungsgemäßen Verfahrens bei Austausch einer Komponente

### Ausführung der Erfindung

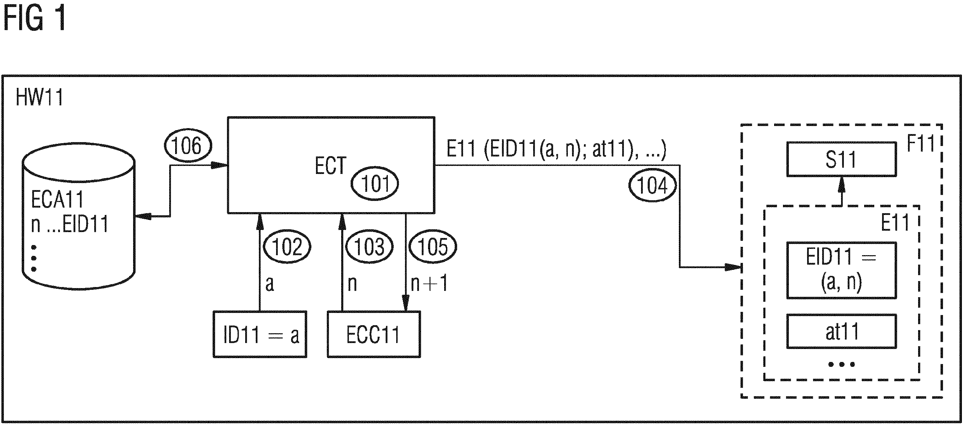

Figur 1 zeigt schematisch und beispielhaft einen Ablauf des erfindungsgemäßen Verfahrens zum Erzeugen eines Identifikators EID11 für eine Informationseinheit E11 in einem verteilten System. Die neu zu erstellende Informationseinheit bzw. Entität E11 soll nach ihrer Erstellung einer Funktionseinheit S11 - z.B. Softwareinstanz oder Hardwareeinheit - zugeordnet werden, welche durch die Zuordnung der Informationseinheit E11 eine Funktionsweise bzw. Funktionalität F11 erhält. Die Funktionalität F11 ist dann auf einer Komponente HW11 (z.B. Hardwareeinheit) ablauffähig und/oder ausführbar. Eine derartige Informationseinheit E11 bzw. Entität E11 kann beispielsweise nur ein Datensatz mit Konfigurationsdaten und/oder Parameters sein oder eine Gerätefirmware/-software, eine ladbare Applikation, ein ausführbarer Programmkode, etc., durch welche in Verbindung mit entsprechenden Konfigurationsdaten und/oder Parametern die grundsätzliche Funktionsweise bzw. Funktionalität F11 einer Komponente (z.B. Hardwareeinheit, Automatisierungsgerät, Knoten, IED, RTU, etc.) definiert wird. Die Informationseinheit E11 umfasst dazu entsprechende Daten bzw. Attribute at11 sowie einen zugehörigen Identifikator EID11, durch welche die Informationseinheit E11 im verteilten System eindeutig identifizierbar und gegebenenfalls adressierbar ist. Der Identifikator EID11 wird bei der Erstellung der Informationseinheit E11 erzeugt.

Zum Erstellen von Informationseinheiten E11 und der zugehörigen Identifikatoren EID11 kann eine Generierungseinheit ECT vorgesehen sein. Die Generierungseinheit ECT kann - wie in Figur 1 beispielhaft dargestellt - als Funktionseinheit ausgeführt sein, welche auf derselben Komponente HW11 ausgeführt wird wie die Funktionseinheit S11 bzw. die Funktionalität F11, für welche die Informationseinheit E11 und der zugehörige Identifikator EID11 erstellt wird.

Die Komponente HW11 weist eine eindeutige Komponentenidentifikation ID11 mit einem Wert a auf, welche in der Komponente HW11 z.B. in einem nicht flüchtigen bzw. spannungsausfallsicheren Speicherelement (z.B. ROM, EEPROM) gespeichert ist. Die Speicherung der eindeutigen Komponentenidentifikation ID11 kann beispielsweise kodiert erfolgen. Als eindeutige Komponentenidentifikation ID11 kann beispielsweise eine Hardware-Seriennummer, eine eindeutige, prozesstechnische Adresse oder Kommunikationsadresse, etc. verwendet werden. Die eindeutige Komponentenidentifikation ID11 kann z.B. während einer Erstinitialisierung (beispielsweise bei einer Installation der Komponenten HW11) in die Komponente HW11 z.B. mittels Scannen eines Barcodes oder QR-Codes, welcher der Komponentenidentifikation ID11 enthält, oder durch manuelle Eingabe in die Komponente HW11 bzw. das entsprechende Speicherelement eingebracht werden. Das Einbringen der eindeutigen Komponentenidentifikation ID11 kann z.B. mit Hilfe der Generierungseinheit ECT durchgeführt werden. Alternativ kann die Komponente HW11 bereits eine eingespeicherte, eindeutige Komponentenidentifikation aufweisen, welche z.B. werk- oder herstellerseitige in die Komponente HW11 eingebracht wurde wie z.B. eine Seriennummer (und eine Versionsnummer), etc.

Weiterhin umfasst die Komponente HW11 eine Zählereinheit ECC11, welche z.B. als nicht flüchtiges bzw. spannungsausfallsicheres Speicherelement der Komponente HW11 oder als Teile eines nicht flüchtigen Speicherelements der Komponente HW11 ausgeführt sein kann. In der Zählereinheit ECC11 kann ein jeweils aktueller Zählerwert n abgelegt, welcher idealerweise kodiert in der Zählereinheit ECC11 gespeichert ist. Vor einer erstmaligen Durchführung des erfindungsgemäßen Verfahrens wird die Zählereinheit ECC11 wird mit einem definierten Startwert initialisiert. Eine Initialisierung der Zählereinheit ECC11 der Komponente HW11 kann beispielsweise durch einen Hersteller der Komponente (z.B. werkseitig) erfolgen oder bei der Erstinitialisierung bzw. Installation der Komponente HW11 durchgeführt werden. Als definierter Startwert kann beispielsweise ein beliebiger ganzzahliger Wert n oder der Wert Null verwendet werden.

Soll nun auf der Komponente HW11 für eine Funktionseinheit S11 eine neue Informationseinheit E11 mit Attributen at11 und einem eindeutigen, zugehörigen Identifikator EID11 z.B. als erstes Attribut erstellt werden, so wird z.B. mit Hilfe der Generierungseinheit ECT in einer Erstellungsstartphase 101 die Erzeugung der neuen Informationseinheit E11 gestartet.

Für die Erstellung des Identifikators EID11 für die neue Informationseinheit E11 wird die eindeutige Komponentenidentifikation ID11 der Komponente HW11 herangezogen. Dazu wird in einer Identifikationsauslesephase 102 von der Generierungseinheit ECT der Wert a der eindeutigen Komponentenidentifikation ID11 aus dem nicht flüchtigen Speicherelement ausgelesen. Bei einer kodierten Speicherung der Komponentenidentifikation ID11 kann diese noch auf Konsistenz und Vertrauenswürdigkeit geprüft werden.

In einer Erstellungsphase 103 wird der aktuelle Zählerwert n aus der Zählereinheit ECC11 z.B. von der Generierungseinheit ECT ausgelesen. Dazu ist während der gesamten Erstellung der neuen Informationseinheit E11 und des zugehörigen Identifikators EID11 idealerweise ein Zugriff auf die Zählereinheit ECC11 zumindest eingeschränkt. D.h. insbesondere ein Speicher- bzw. Schreibzugriff auf die Zählereinheit ECC11 wird für die Erzeugung des neuen Identifikators gesperrt und ein Lesezugriff zumindest eingeschränkt. Weiterhin wird in der Erstellungsphase 103 die Komponentenidentifikation ID11 bzw. der Wert a der Komponentenidentifikation ID11 mit dem jeweils aktuellen Zählerwert n kombiniert, welcher aus der Zählereinheit ECC11 ausgelesen wurde. Der neue Identifikator EID11 für die neue Informationseinheit E11 wird damit als Kombination aus der eindeutigen Komponentenidentifikation ID11 bzw. deren Wert a und dem jeweils aktuellen Zählerwert n der Zählereinheit ECC11 erstellt. Dabei ist wichtig, dass die Komponentenidentifikation ID11 und der jeweils aktuelle Zählerwert n der Zählereinheit ECC11 von derselben Komponente HW11 stammen bzw. auf derselben Komponente HW11 hinterlegt sind.

Für die Erstellung des neuen Identifikators EID11 können auch noch zusätzliche Identifikationsinformationen herangezogen werden. Als zusätzliche Identifikationsinformation können beispielsweise eine aktuelle Zeit bzw. Zeitpunkt der Erstellung, ein Zeitstempel, eine so genannte MAC-Adresse der jeweiligen Komponente, eine Knoten-Identifikation, ein Versionsinformation (z.B. eines Softwaremoduls, einer Firmware, etc.), eine Typenkennung, Namen, Namensbereich, etc. verwendet werden.

Nach Erstellen der neuen Informationseinheit E11 mit den jeweiligen Attributen at11 und dem zugehörigen Identifikator EID11 wird in einer Zuordnungsphase 104 die Informationseinheit E11 für eine Konfiguration der Funktionseinheit S11 als Funktionalität F11 zugeordnet. Dabei kann die Informationseinheit E11 mit dem zugehörigen Identifikator EID11 als erstes Attribut und weiteren Attributen at11 in einem nicht flüchtigen Speicherelement wie z.B. einem EEPROM, etc. auf der Komponente HW11 abgespeichert werden. Die Speicherung der Informationseinheit E11 mit dem zugehörigen Identifikator EID11 und Attributen at11 kann ebenfalls kodiert erfolgen.

In einer Inkrementierungsphase 105 wird dann der Zählerwert n, welcher in der Erstellungsphase 103 aus der Zählereinheit ECC11 ausgelesen wurde, inkrementiert und damit ein neuer aktueller Zählerwert n+1 erzeugt. Die Inkrementierung des jeweils aktuellen Zählerwerts n kann z.B. von der Generierungseinheit ECT durchgeführt werden. Nach dem Inkrementieren wird der inkrementierte Zählerwert n+1 in der Inkrementierungsphase 105 als neuer aktueller Zählerwert n+1 in der Zählereinheit ECC11 abgespeichert.

Soll für die Komponente HW11 mit Hilfe der Generierungseinheit ECT eine weitere Informationseinheit mit einem jeweiligen, zugehörigen Identifikator für die Konfiguration einer weiteren Funktionseinheit erstellt werden, so werden wieder die Phase des erfindungsgemäßen Verfahrens durchlaufen: die Erstellungsstartphase 101, die Identifikationsauslesephase 102 zum Auslesen der eindeutigen Komponentenidentifikation ID11 mit dem Wert a, die Erstellungsphase 103 zum Erstellen des entsprechenden, eindeutigen Identifikators, die Zuordnungsphase 104 und die Inkrementierungsphase 105. Allerdings wird in der Erstellungsphase 103 der Wert a der Komponentenidentifikation ID11 mit dem aktuellen Zählerwert n+1 aus der Zählereinheit ECC11 der Komponente HW11 kombiniert. In der Inkrementierungsphase 105 wird dann der Zählerwert n+1 inkrementiert und dabei als neuer Zählerwert z.B. ein Wert n+2 erhalten, welcher dann als neuer aktueller Zählerwert in der Zählereinheit abgelegt wird.

Zusätzlich können in einer Archivierungsphase 106 die jeweiligen Informationseinheit E11 und der jeweils zugehörige Identifikator EID11 in einer Speichereinheit ECA11 abgespeichert werden, welcher ebenfalls von Komponente HW11 umfasst wird. Dabei kann beispielsweise der für den Identifikator E11 genutzte Zählerwert n als Nummer gespeichert werden. Dieser Nummer n bzw. dem entsprechenden Identifikator EID11 können beispielsweise Status- und/oder Erstellungsinformationen wie z.B. Erstellungszeit, Zeit der letzten Statusänderung, Status der zugehörigen Informationseinheit (z.B. aktiv, ungültig, für Verwendung freigegeben, inaktiv, gesperrt, gelöscht, etc.) zugeordnet werden. Die in der Speichereinheit ECA11 zu dem Identifikator E11 abgelegten Informationen können dann z.B. mittels der Generierungseinheit ECT bearbeitet werden. So kann beispielsweise die Statusinformation des Identifikators EID11 ergänzt, geändert oder aktualisiert werden. In der Speichereinheit ECA11 kann z.B. durch entsprechende Änderung der Statusinformation der Informationseinheit E11 bzw. des zugehörigen Identifikators EID11 angezeigt werden, wenn die Informationseinheit E11 bzw. der zugehörige Identifikator EID11 z.B. für ungültig erklärt, für die Verwendung freigegeben, (vorübergehend) gesperrt oder gelöscht wurde oder werden soll.

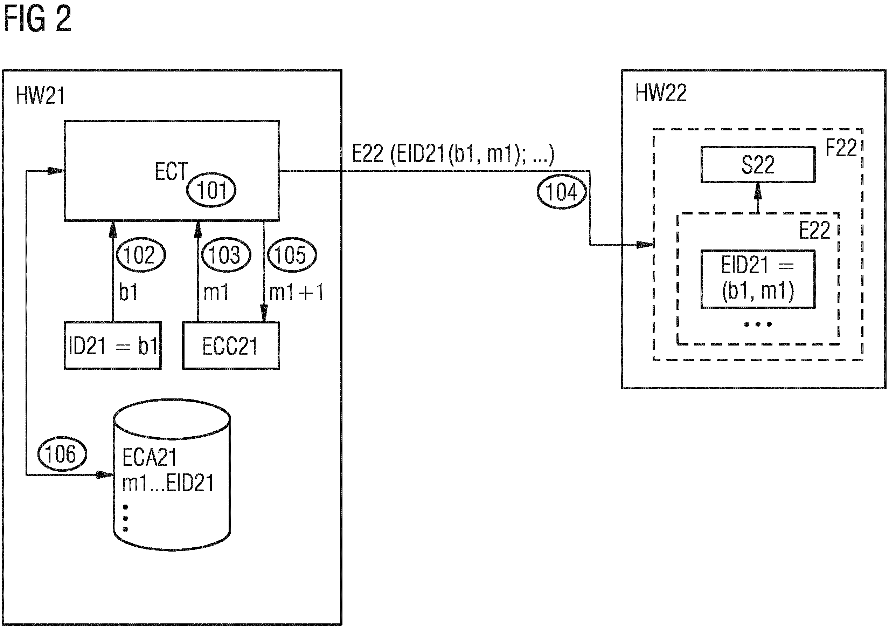

Alternativ zu der in Figur 1 dargestellten, beispielhaften Variante des erfindungsgemäßen Verfahrens, bei welcher die Generierungseinheit ECT als Funktionseinheit auf derselben Komponente HW11 ausgeführt wird, für welche die Informationseinheit E11 erzeugt wird, kann die Generierungseinheit ECT als Funktionseinheit einer separaten Komponente ausgeführt werden. In Figur 2 ist beispielhaft eine erste Ausführungsvariante des erfindungsgemäßen Verfahrens dargestellt, bei welcher die Generierungseinheit ECT auf einer separaten, ersten Komponente HW21 ausgeführt wird.

Neben der Generierungseinheit ECT weist die erste Komponente HW21 eine eindeutige Komponentenidentifikation ID21 mit einem Wert b sowie eine Zählereinheit ECC21 auf, in welcher ein aktueller Zählerwert m abgelegt ist. Die Funktionseinheit F22, welche mittels der Informationseinheit E22 als Funktionalität F22 konfiguriert werden soll, befindet sich auf einer zweiten Komponente HW22 bzw. einer Zielkomponente HW22. Die zweite Komponente HW22 verfügt z.B. über keine oder keine eindeutige Komponentenidentifikation. Die erste und die zweite Komponente sind z.B. mittels einer Kommunikationsverbindung (z.B. Bussystem, LAN-Verbindung, Internet, etc.) direkt miteinander verbunden.

Zum Erzeugen einer Informationseinheit E22 zum Konfigurieren der Funktionseinheit S22 auf der zweiten Komponente HW22 sowie des zugehörigen Identifikators EID21 wird wieder z.B. mit Hilfe der Generierungseinheit ECT auf der ersten Komponente HW21 in der Erstellungsstartphase 101 die Erzeugung der neuen Informationseinheit E22 gestartet.

Für die Erstellung des zugehörigen Identifikators EID21 wird dann in der Identifikationsauslesephase 102 von der Generierungseinheit ECT die eindeutige Komponentenidentifikation ID21 mit dem Wert b1 der ersten Komponente HW21 herangezogen, da die zweite Komponente HW22 z.B. keine eindeutige Komponentenidentifikation aufweist. In der Erstellungsphase 103 wird der aktuelle Zählerwert m aus der Zählereinheit ECC21 der ersten Komponente HW21 z.B. von der Generierungseinheit ECT ausgelesen und mit der eindeutigen Komponentenidentifikation ID21 bzw. deren Wert b1 kombiniert. Der neue Identifikator EID21 für die neue Informationseinheit E22 wird damit als Kombination aus der eindeutigen Komponentenidentifikation ID21 bzw. deren Wert b1 und dem jeweils aktuellen Zählerwert m1 der Zählereinheit ECC21 erstellt, wobei beide Werte b1, m1 von der ersten Komponente HW21 stammen.

Nach Erstellen der Informationseinheit E22 und dem zugehörigen Identifikator EID21 wird in der Zuordnungsphase 104 die Informationseinheit E22 an die zweite Komponente HW22 übertragen und der Funktionseinheit S22 zum Konfigurieren als Funktionalität F22 zugeordnet. Die Informationseinheit E22 mit dem zugehörigen Identifikator EID21 können in einem nicht flüchtigen Speicherelement wie z.B. einem EEPROM, etc. auf der zweiten Komponente HW22 z.B. kodiert abgespeichert werden.

In der Inkrementierungsphase 105 wird dann der Zählerwert m1, welcher in der Erstellungsphase 103 aus der Zählereinheit ECC21 der ersten Komponente HW21 ausgelesen wurde, z.B. von der Generierungseinheit ECT inkrementiert und damit ein neuer aktueller Zählerwert m1+1 erzeugt. Nach dem Inkrementieren wird der inkrementierte Zählerwert m1+1 in der Inkrementierungsphase 105 als neuer aktueller Zählerwert m1+1 in der Zählereinheit ECC21 der ersten Komponente HW21 abgespeichert.

Optional kann wieder die Archivierungsphase 106 z.B. von der Generierungseinheit ECT durchgeführt werden. Dabei kann die erstellte Informationseinheit E22 bzw. der zugehörige Identifikator EID21 in einer Speichereinheit ECA21 abgespeichert werden, welcher beispielsweise von der ersten Komponente HW21 umfasst wird. Als Nummer kann beispielsweise der für die Erstellung des Identifikators E21 genutzte Zählerwert m1 als Nummer verwendet werden.

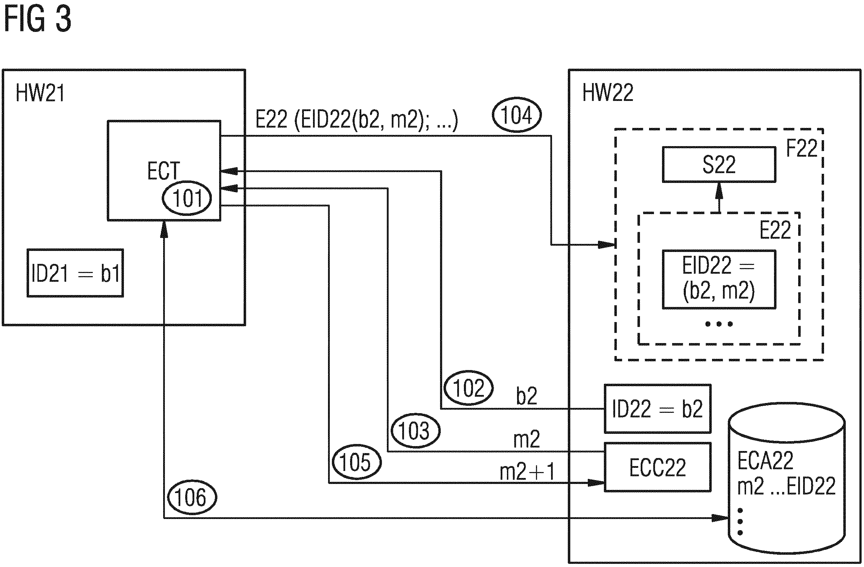

Figur 3 zeigt beispielhaft eine weitere, zweite Ausführungsvariante des erfindungsgemäßen Verfahrens, wobei die Generierungseinheit ECT wieder auf einer separaten, ersten Komponente HW21 mit einer Komponentenidentifikation ID21 mit dem Wert b1 ausgeführt wird. Die erste Komponente HW21 ist wieder über eine direkte Kommunikationsverbindung (z.B. Bussystem, LAN-Verbindung, Internet, etc.) mit einer zweiten Komponente HW22 verbunden. Auf der zweiten Komponente HW22 soll mittels einer Informationseinheit E22 eine Funktionseinheit S22 als Funktionalität F22 konfiguriert werden. Im Unterschied zur in Figur 2 dargestellten ersten Ausführungsvariante weist die zweite Komponente HW22 nun eine eigene eindeutige Komponentenidentifikation ID22 mit einem Wert b2 sowie eine eigene Zählereinheit ECC22 mit einem aktuellen Zählerwert m2 auf.

Zum Erzeugen der Informationseinheit E22 zum Konfigurieren der Funktionseinheit S22 auf der zweiten Komponente HW22 sowie eines zugehörigen Identifikators EID22 wird wieder z.B. mit Hilfe der Generierungseinheit ECT auf der ersten Komponente HW21 in der Erstellungsstartphase 101 die Erzeugung der Informationseinheit E22 gestartet.

Für die Erstellung des zugehörigen Identifikators EID22 wird nun in der Identifikationsauslesephase 102 von der Generierungseinheit ECT die eindeutige Komponentenidentifikation ID22 mit dem Wert b2 der zweiten Komponente HW22 herangezogen und z.B. über die Kommunikationsverbindung an die Generierungseinheit ECT auf der ersten Komponente HW21 übermittelt. In der Erstellungsphase 103 wird der aktuelle Zählerwert m2 aus der Zählereinheit ECC22 der zweiten Komponente HW22 z.B. von der Generierungseinheit ECT über die Kommunikationsverbindung ausgelesen. Dann werden die eindeutigen Komponentenidentifikation ID22 bzw. deren Wert b2 der zweiten Komponente HW22 mit dem aktuellen Wert m2 der Zählereinheit ECC22 der zweiten Komponente HW22 z.B. von der Generierungseinheit ECT kombiniert. Der Identifikator EID22 für die neue Informationseinheit E22 wird damit als Kombination aus der eindeutigen Komponentenidentifikation ID22 bzw. deren Wert b2 und dem jeweils aktuellen Zählerwert m2 der Zählereinheit ECC22 erstellt, wobei nun beide Werte b2, m2 von der zweiten Komponente HW22 stammen.

Nach Erstellen der Informationseinheit E22 und dem zugehörigen Identifikator EID22 auf der ersten Komponente HW21 wird in der Zuordnungsphase 104 die Informationseinheit E22 an die zweite Komponente HW22 übertragen und der Funktionseinheit S22 zum Konfigurieren als Funktionalität F22 zugeordnet. Die Informationseinheit E22 mit dem zugehörigen Identifikator EID22 können in einem nicht flüchtigen Speicherelement wie z.B. einem EEPROM, etc. auf der zweiten Komponente HW22 z.B. kodiert abgespeichert werden.

In der Inkrementierungsphase 105 wird der Zählerwert m2 aus der Zählereinheit ECC22 der zweiten Komponente HW22 z.B. von der Generierungseinheit ECT inkrementiert und damit ein neuer aktueller Zählerwert m2+1 erzeugt. Nach dem Inkrementieren wird der inkrementierte Zählerwert m2+1 als neuer aktueller Zählerwert m2+1 an die zweite Komponente HW22 übertragen und dort in der Zählereinheit ECC22 der zweiten Komponente HW22 abgespeichert.

Optional kann wieder die Archivierungsphase 106 z.B. von der Generierungseinheit ECT durchgeführt werden. Dabei kann die erstellte Informationseinheit E22 bzw. der zugehörige Identifikator EID22 in einer Speichereinheit ECA22 abgespeichert werden, welcher beispielsweise von der zweiten Komponente HW22 umfasst wird. Als Nummer kann beispielsweise der für die Erstellung des Identifikators E22 genutzte Zählerwert m2 als Nummer verwendet werden.

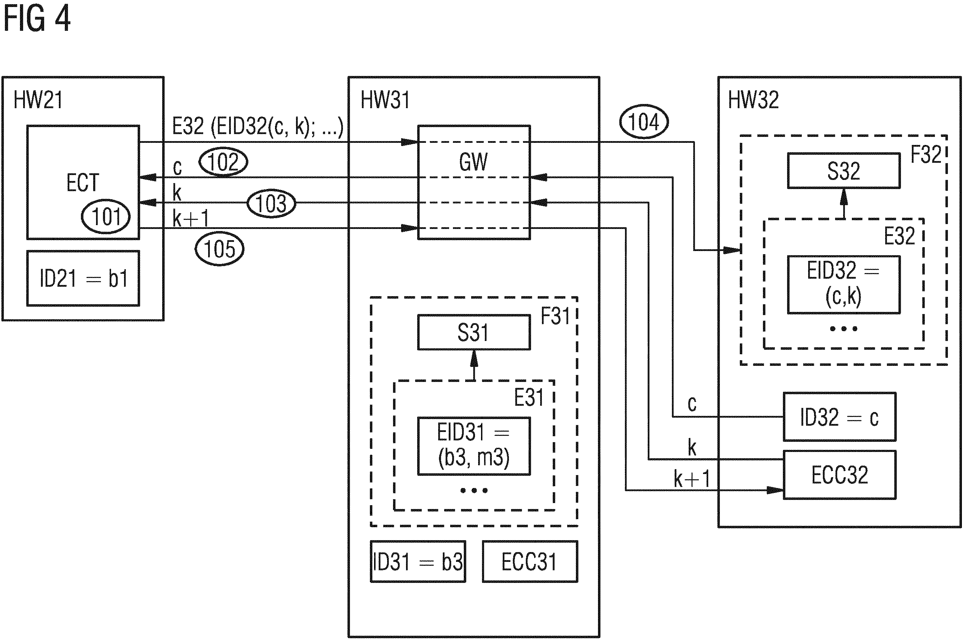

In Figur 4 ist beispielhaft eine dritte Ausführungsvariante des erfindungsgemäßen Verfahrens dargestellt, bei welcher die Generierungseinheit ECT wieder auf einer separaten, ersten Komponente HW21 mit einer Komponentenidentifikation ID21 mit dem Wert b1 ausgeführt wird. Dabei ist eine Zielkomponente HW32, welche z.B. eine eigene, eindeutige Komponentenidentifikation ID32 mit dem Wert c sowie eine eigene Zählereinheit mit einem aktuellen Zählerwert k aufweist, indirekt an die erste Komponente HW21 angebunden ist. D.h. die Zielkomponente HW32 kann mittels einer Kommunikationsvermittungseinheit GW mit der ersten Komponente HW21 bzw. mit der Generierungseinheit ECT kommunizieren. Die Kommunikationsvermittungseinheit GW (z.B. Gateway, Proxyserver, Router, Bridge, etc.) ist auf einer zweiten Komponente HW31 untergebracht.

Die zweiten Komponente HW31 mit einer eigenen Komponentenidentifikation ID31 mit einem Wert b3 und einer eigenen Zählereinheit ECC31 weist z.B. neben der Kommunikationsvermittungseinheit GW eine beispielhafte Funktionseinheit S31 auf. Die Funktionseinheit F31 der zweiten Komponente HW31 ist z.B. mittels einer Informationseinheit E31 als Funktionalität F31 konfiguriert. Die Informationseinheit E31 der zweiten Komponente HW31 sowie ein zugehöriger Identifikator EID31 wurden - wie z.B. in Figur 3 dargestellt - mittels der Generierungseinheit ECT der ersten Komponente HW21 erstellt. Dabei wurden für den Identifikator EID z.B. die Komponentenidentifikation ID31 mit einem Wert b3 der zweiten Komponente HW31 sowie der entsprechende Zählerwert m3 der Zählereinheit ECC31 der zweiten Komponente HW31 verwendet.

Soll nun zur Konfiguration der Funktionseinheit S32 der Zielkomponente HW32 als Funktionalität F32 eine Informationseinheit E32 mit zugehörigem Identifikator EID32 erstellt werden soll, wird wieder z.B. mit Hilfe der Generierungseinheit ECT auf der ersten Komponente HW21 in der Erstellungsstartphase 101 die Erzeugung der Informationseinheit E32 sowie des zugehörigen Identifikators EID32 gestartet.

Für die Erstellung des zugehörigen Identifikators EID32 wird in der Identifikationsauslesephase 102 von der Generierungseinheit ECT die eindeutige Komponentenidentifikation ID32 mit dem Wert c der Zielkomponente HW32 herangezogen und z.B. über die Kommunikationsvermittlungseinheit GW der zweiten Komponente HW31 an die Generierungseinheit ECT auf der ersten Komponente HW21 übermittelt. In der Erstellungsphase 103 wird der aktuelle Zählerwert k aus der Zählereinheit ECC32 der Zielkomponente HW32 z.B. von der Generierungseinheit ECT über die Kommunikationsvermittlungseinheit GW ausgelesen. Dann werden die eindeutigen Komponentenidentifikation ID32 bzw. deren Wert c der Zielkomponente HW32 mit dem aktuellen Wert k der Zählereinheit ECC32 der Zielkomponente HW32 z.B. von der Generierungseinheit ECT kombiniert. Der Identifikator EID32 für die neue Informationseinheit E32 wird damit als Kombination aus der eindeutigen Komponentenidentifikation ID32 bzw. deren Wert c und dem jeweils aktuellen Zählerwert k der Zählereinheit ECC32 erstellt, wobei die beiden Werte c, k von der Zielkomponente HW32 stammen.

Alternativ kann - wenn die Zielkomponente HW32 über keine oder keine eindeutige Komponentenidentifikation ID32 und/oder eigene Zählereinheit ECC32 verfügt - beispielsweise die Komponentenidentifikation ID31 bzw. deren Wert b3 sowie der jeweils aktuelle Zählerwert m3 der Zählereinheit ECC31 der zweiten Komponente HW31 für die Erstellung des Identifikators EID32 z.B. von der Generierungseinheit ECT herangezogen werden.

Nach Erstellen der Informationseinheit E32 und dem zugehörigen Identifikator EID32 auf der ersten Komponente HW21 wird in der Zuordnungsphase 104 die Informationseinheit E32 über die Kommunikationsvermittlungseinheit GW der zweiten Komponente HW31 an Zielkomponente HW32 übertragen und der Funktionseinheit S32 zum Konfigurieren als Funktionalität F32 zugeordnet. Die Informationseinheit E32 mit dem zugehörigen Identifikator EID32 können in einem nicht flüchtigen Speicherelement wie z.B. einem EEPROM, etc. auf der Zielkomponente HW32 z.B. kodiert abgespeichert werden.

In der Inkrementierungsphase 105 wird der Zählerwert k aus der Zählereinheit ECC32 der Zielkomponente HW32 z.B. von der Generierungseinheit ECT inkrementiert und damit ein neuer aktueller Zählerwert k+1 erzeugt. Nach dem Inkrementieren wird der inkrementierte Zählerwert k+1 als neuer aktueller Zählerwert k+1 wieder über die Kommunikationsvermittlungseinheit GW an die Zielkomponente HW32 übertragen und dort in der Zählereinheit ECC32 der Kommunikationsvermittlungseinheit GW abgespeichert.

Optional kann wieder die Archivierungsphase 106 vorgesehen sein. Dabei kann die erstellte Informationseinheit E32 bzw. der zugehörige Identifikator EID32 in einer Speichereinheit abgespeichert werden, welcher beispielsweise von der ersten Komponente HW21, zweiten Komponente HW22 oder der Zielkomponente HW32 umfasst wird.

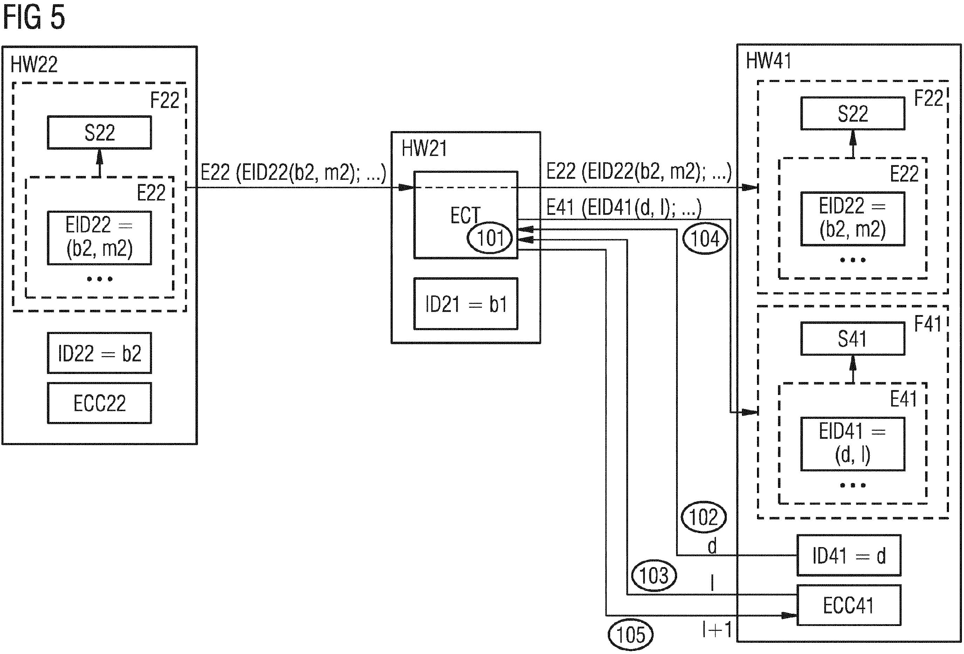

Figur 5 zeigt beispielhaft eine weitere Ausführungsvariante des erfindungsgemäßen Verfahrens bei Einsatz einer Ersatzkomponente HW41, welche beispielsweise eine eigene, eindeutige Komponentenidentifikation ID41 mit einem Wert d und eine eigene Zählereinheit ECC41 mit z.B. einem aktuellen Zählerwert l aufweist.

Weiterhin wird die Generierungseinheit ECT wieder separat als Funktionseinheit auf der ersten Komponente HW21 mit der Komponentenidentifikation ID21 mit dem Wert b1 ausgeführt. Auf einer zweiten Komponente HW22 wurde - wie in Figur 3 dargestellt - eine Funktionseinheit S22 mit einer Informationseinheit E22 als Funktionalität F22 konfiguriert. Die Informationseinheit E22 weist einen Identifikator EID22 auf, welcher gemäß dem erfindungsgemäßen Verfahren auf Basis einer Komponentenidentifikation ID22 bzw. deren Wert b2 der zweiten Komponente HW22 sowie eines aktuellen Zählerwerts m2 einer Zählereinheit ECC22 der zweiten Komponente HW22 erstellt wurde. Die zweite Komponente HW22 soll z.B. aufgrund eines Defekts oder einer durchzuführenden Reparatur ausgetauscht werden, wobei die Funktionalität F22 dort - ohne Veränderung - ablaufen soll.

Dazu wird die Informationseinheit E22 mit allen Attributen, insbesondere mit dem zugehörigen Identifikator EID22 z.B. mit Hilfe der Generierungseinheit ECT der ersten Komponente HW21 aus der zweiten Komponente HW22 z.B. über eine Kommunikationsverbindung ausgelesen. Für die Konfiguration der Funktionseinheit S22, welche entweder ebenfalls an die Ersatzkomponente HW41 übertragen oder auf dieser neu installiert werden muss, wird dann die Informationseinheit E22 mit allen Attributen, insbesondere mit dem zugehörigen Identifikator EID22, in die Ersatzkomponente HW41 transferiert, dort der Funktionseinheit S22 zugeordnet und in einem nicht flüchtigen Speicherelement (z.B. EEPROM, etc.) gespeichert. Durch die Zuordnung der Informationseinheit E22 zur Funktionseinheit S22 ist dann die Funktionalität F22 auf der Ersatzkomponente HW41 verfügbar. Der Identifikator EID22, welcher auf Basis der Komponentenidentifikation ID22 und des Zählerwerts m2 der Zählereinheit ECC22 der zweiten Komponente HW22 generiert wurde, wird unverändert beibehalten.

Der Transfer der Informationseinheit E22 von der zweiten Komponente HW22 zur Ersatzkomponente HW41 kann z.B. manuell, automatisiert oder automatisch mit Hilfe der Generierungseinheit ECT durchgeführt werden. Für die Übertragung kann beispielsweise ein Datenträger (z.B. USB-Stick, SD-Karte, etc.) oder eine direkte Kommunikationsverbindung zwischen den Komponenten HW22, HW41 bzw. über eine weitere Komponente HW21 oder über eine Kommunikationsvermittlungseinheit GW verwendet werden.

Soll für die Ersatzkomponente HW41 eine weitere Informationseinheit E41 mit zugehörigem Identifikator EID41 zum Konfigurieren einer weiteren Funktionseinheit S41 als Funktionalität F41 erstellt werden, so werden wieder die Phase des erfindungsgemäßen Verfahrens durchlaufen: die Erstellungsstartphase 101, die Identifikationsauslesephase 102 zum Auslesen der eindeutigen Komponentenidentifikation ID41 mit dem Wert d, die Erstellungsphase 103 zum Erstellen des entsprechenden, eindeutigen Identifikators EID41, die Zuordnungsphase 104 und die Inkrementierungsphase 105. Dabei wird in der Identifikationsauslesephase 102 z.B. von der Generierungseinheit ECT die Komponentenidentifikation ID41 mit dem Wert d der Ersatzkomponente HW41 ausgelesen und in der Erstellungsphase 103 mit einem jeweils aktuellen Zählerwert l der Zählereinheit ECC41 der Ersatzkomponente HW41 kombiniert. In der Inkrementierungsphase 105 wird dann der Zählerwert l der Zählereinheit ECC41 der Ersatzkomponente HW41 inkrementiert. Der dabei erhaltene neue Zählerwert l+1 wird dann neuer aktueller Zählerwert l+1 in der Zählereinheit ECC41 der Ersatzkomponente HW41 abgelegt wird.

Bei allen in den Figuren 1 bis 5 beispielhaft dargestellten Ausführungsvarianten des erfindungsgemäßen Verfahrens können die Komponente HW11, ..., HW41, für welche Informationseinheiten E11, ..., E41 mit zugehörigen, eindeutigen Identifikatoren EID11, ..., EID41 erstellt werden, und/oder die Komponente HW11, HW21, auf welcher die Generierungseinheit ECT ausgeführt wird, aus mehreren Hardwareeinheiten (z.B. Prozessoren, Computer bei Cloud Computing, etc.) bestehen. Diese Hardwareeinheiten können über ein Netzwerk oder Kommunikationsverbindungen miteinander kommunizieren, wobei für das erfindungsgemäße Verfahren zumindest eine Hardwareeinheit HW11, ..., HW41 eine eigene, eindeutige Komponentenidentifikation ID11, ..., ID41 und einen Zählereinheit ECC11, ..., ECC41 aufweisen muss.

## Patentansprüche

1. Verfahren zum Erzeugen von Identifikatoren (EID11, ..., EID41) für Informationseinheiten (E11, ..., E41) in einem verteilten System, wobei durch Zuordnung einer jeweiligen Informationseinheit (E11, ..., E41) zu einer Funktionseinheit (S11, ..., S41) des verteilten Systems eine jeweilige Funktionsweise (F11, ..., F41) der Funktionseinheit (S11, ..., S41) festgelegt wird, und wobei bei Erstellung der jeweiligen Informationseinheit (E11, ..., E41) ein Identifikator (EID11, ..., EID41) erzeugt (101) wird, welcher zur Identifikation der jeweiligen Informationseinheit (E11, ..., E41) zugeordnet wird, ***dadurch gekennzeichnet, dass*** für den Identifikator (EID11, ..., EID41) eine eindeutige Komponentenidentifikation (ID11, ..., ID41) einer Komponente (HW11, ..., HW41) des verteilten Systems herangezogen wird (102), dass die eindeutige Komponentenidentifikation (ID11, ..., ID41) mit einem jeweils aktuellen Zählerwert (n, m1, m2, ..., l) einer Zählereinheit (ECC11, ... ECC41) kombiniert wird (103), wobei die Zählereinheit (ECC11, ... ECC41) von der Komponente (HW11, ..., HW41) des verteilten Systems umfasst wird, welcher die verwendete, eindeutige Komponentenidentifikation (ID11, ..., ID41) zugeordnet ist, dass nach Erstellen des jeweiligen Identifikators (EID11, ..., EID41) der Zählerwert (n, m1, m2, ..., l) inkrementiert wird (104), und dass der inkrementierte Zählerwert (n+1, m1+1, m2+1, ..., l+1) als jeweils aktueller Zählerwert in der Zählereinheit (ECC11, ... ECC41) abgespeichert wird (105) .

2. Verfahren nach Anspruch 1, ***dadurch gekennzeichnet, dass*** während der Erstellung der Informationseinheit (E11, ..., E41) und des jeweils zugehörigen Identifikators (EID11, ..., EID41) ein Zugriff auf die Zählereinheit (ECC11, ..., ECC41) zumindest eingeschränkt wird (101).

3. Verfahren nach einem der Ansprüche 1 bis 2, ***dadurch gekennzeichnet, dass*** die Zählereinheit (ECC11, ..., ECC41) mit einem definierten Startwert (n, m1, m2, ..., l) initialisiert wird.

4. Verfahren nach einem der Ansprüche 1 bis 3, ***dadurch gekennzeichnet, dass*** für die Erstellung der Informationseinheit (E11, ..., E41) und des jeweils zugehörigen Identifikators (EID11, ..., EID41) eine Generierungseinheit (ECT) vorgesehen wird.

5. Verfahren nach einem der Ansprüche 1 bis 4, ***dadurch gekennzeichnet, dass*** die Generierungseinheit (ECT) als Funktionseinheit auf derselben Komponente (HW11) ausgeführt wird, für welche die jeweilige Informationseinheit (E11) und der jeweils zugehörige Identifikator (EID11) erstellt wird (101, ..., 104).

6. Verfahren nach einem der Ansprüche 1 bis 4, ***dadurch gekennzeichnet, dass*** die Generierungseinheit (ECT) als Funktionseinheit auf einer separaten Komponente (HW21) ausgeführt wird, wobei die separate Komponente (HW21) über eine direkte Kommunikationsverbindung und/oder eine Kommunikationsvermittungseinheit (GW) mit der jeweiligen Komponente (HW22, HW31, HW32) verbunden wird, für welche die jeweilige Informationseinheit (E22, E31, E32) und der jeweils zugehörige Identifikator (EID21, EID22, EID31, EID32) erstellt wird (101, ..., 104).

7. Verfahren nach einem der vorangegangenen Ansprüche, ***dadurch gekennzeichnet, dass*** die jeweilige Informationseinheit (E11, ..., E41) und der jeweils zugehörige Identifikator (EID11, ..., EID41) in einer Speichereinheit (ECA11, ECA21, ECA22) mit einer zusätzlichen Status- und/oder Erstellungsinformation abgespeichert werden (106).

8. Verfahren nach Anspruch 7, ***dadurch gekennzeichnet, dass*** in der Speichereinheit (ECA11, ECA21, ECA22) zu den jeweils erzeugten Identifikatoren (EID11, ..., EID41) abgelegte Informationen mit Hilfe der Generierungseinheit (ECT) bearbeitet werden (106).

9. Verfahren nach einem der vorangegangenen Ansprüche, ***dadurch gekennzeichnet, dass*** für die Erstellung des Identifikators (EID11, ..., EID41) für die jeweilige Informationseinheit (E11, ..., E41) zusätzliche Identifikationsinformation verwendet wird (102, 103).

10. Verfahren nach einem der vorangegangenen Ansprüche, ***dadurch gekennzeichnet, dass*** die jeweilige Informationseinheit (E11, ..., E41) und der jeweils zugehörige Identifikator (EID11, ..., EID41) nach einer Zuordnung zur jeweiligen Funktionseinheit (S11, ..., S41) in einem nicht flüchtigen Speicherelement abgespeichert werden (104).

11. Verfahren nach einem der vorangegangenen Ansprüche, ***dadurch gekennzeichnet, dass*** die Komponentenidentifikation (ID11, ..., ID41) und der jeweils aktuelle Zählerwert (n, m1, m2, ..., l) der Zählereinheit (ECC11, ..., ECC41) in einem nicht flüchtigen Speicherelement auf der jeweiligen Komponente abgespeichert werden (105).

12. Verfahren nach einem der vorangegangenen Ansprüche, ***dadurch gekennzeichnet, dass*** die Komponentenidentifikation (ID11, ..., ID41), der jeweils aktuelle Zählerwert (n, m1, m2, ..., l) der Zählereinheit (ECC11, ..., ECC41) sowie die jeweiligen Identifikatoren (EID11, ..., EID41) der jeweiligen Informationseinheiten (E11, ..., E41) kodiert gespeichert werden (104, 105).
